# EUROPÄISCHE PATENTSCHRIFT

(11) **EP 3 413 086 B1**
(45) Veröffentlichungstag und Bekanntmachung des Hinweises auf die Patenterteilung: **28.02.2024**
(21) Anmeldenummer: 18175949.9
(22) Anmeldetag: 05.06.2018
(51) Int. Cl.: G01S 17/93, G01S 7/48

(54) **VERFAHREN ZUM CHARAKTERISIEREN EINES AN EIN ZUGFAHRZEUG ANGEHÄNGTEN ANHÄNGERS, FAHRERASSISTENZSYSTEM SOWIE GESPANN**
METHOD FOR CHARACTERISING A TRAILER ATTACHED TO A TRACTOR VEHICLE, DRIVER ASSISTANCE SYSTEM AND ROAD TRAIN
PROCÉDÉ DE CARACTÉRISATION D'UNE REMORQUE ATTACHÉE À UN VÉHICULE TRACTEUR, SYSTÈME D'AIDE À LA CONDUITE AINSI QU'ENSEMBLE ATTELÉ

(30) Priorität: 09.06.2017 DE 102017112786
(43) Veröffentlichungstag der Anmeldung: 12.12.2018
(73) Patentinhaber: Valeo Schalter und Sensoren GmbH, 74321 Bietigheim-Bissingen (DE)
(72) Erfinder: Kozak, Ondrej, 10800 Prag (CZ); Krejci, Petr, 10800 Prag (CZ); Sela, Yaron, 26901 Rakovnik (CZ); Zednik, Pavel, 10800 Prag (CZ)
(74) Vertreter: Pothmann, Karsten

(56) Entgegenhaltungen:
- EP-A1- 3 165 420
- DE-A1-102004 050 149
- DE-A1-102009 007 990
- DE-B4-102004 059 596

## Beschreibung

Die Erfindung betrifft ein Verfahren zum Charakterisieren eines an ein Zugfahrzeug angehängten Anhängers, bei welchem ein den Anhänger beschreibendes kinematisches Modell vorgegeben wird. Die Erfindung betrifft außerdem ein Fahrerassistenzsystem für ein aus einem Zugfahrzeug und einem Anhänger gebildetes Gespann sowie ein Gespann.

Es ist bereits aus dem Stand der Technik bekannt, einen Fahrer eines durch ein Zugfahrzeug und einen Anhänger gebildeten Gespanns beim Rangieren mit dem Gespann zu unterstützen. Beispielsweise kann der Fahrer beim Rückwärtsfahren mit dem Gespann unterstützt werden, indem eine Fahrtrajektorie für den Anhänger bestimmt wird, welche eine voraussichtliche Bewegung des Anhängers beschreibt. Diese Fahrtrajektorie kann dem Fahrer beispielsweise auf einer fahrzeugseitigen Anzeigeeinrichtung angezeigt werden. Zum Vorhersagen der Bewegung des Anhängers werden insbesondere Eigenschaften des Anhängers, beispielsweise geometrische Abmessungen des Anhängers, benötigt. Diese können beispielsweise durch den Fahrer des Zugfahrzeugs manuell eingegeben werden.

Auch ist es bekannt, eine Länge des Anhängers automatisch zu bestimmen. Dazu ist in der US 2011/0181457 A1 ein Fahrzeuglängensensor für ein Fahrzeug mit einer variablen Länge beschrieben. Ein solches Fahrzeug mit variabler Länge kann beispielsweise ein Lkw sein. In der US 2014/0277942 A1 ist ein Fahrzeugsystem zum Schätzen einer Anhängerlänge beschrieben. Dazu umfasst das System eine Vielzahl von Sensoren, welche dazu ausgelegt ist, einen Lenkwinkel des Zugfahrzeugs und einen Anhängewinkel des Anhängers zu messen. Mittels eines kinematischen Modells des Anhängers und des Fahrzeugs, welches den Anhängerwinkel und den Lenkwinkel in Beziehung zu einer Länge des Anhängers setzt, kann die Länge berechnet werden. Gemäß dem Stand der Technik sind also eine Vielzahl an Sensoren an dem Gespann vorgesehen, um die Länge des Anhängers korrekt bestimmen zu können. EP3165420, DE102004059596 und DE102004050149 beschreiben Verfahren, mittels Lidarsensordaten das kinematische Modell eines Anhängers zu bestimmen und zu aktualisieren.

Es ist Aufgabe der vorliegenden Erfindung, eine Lösung bereitzustellen, wie ein an ein Zugfahrzeug angekoppelter auf besonders einfache Weise besonders genau charakterisiert werden kann.

Diese Aufgabe wird erfindungsgemäß durch ein Verfahren, durch ein Fahrerassistenzsystem sowie durch ein Gespann mit den Merkmalen gemäß den jeweiligen unabhängigen Patentansprüchen 1, 13 und 14 gelöst. Vorteilhafte Ausführungsformen der Erfindung sind Gegenstand der abhängigen Patentansprüche, der Beschreibung und der Figuren.

Gemäß einer Ausführungsform eines Verfahrens zum Charakterisieren eines an ein Zugfahrzeug angehängten Anhängers wird ein den Anhänger beschreibendes kinematisches Modell vorgegeben. Es werden Lidar-Sensordaten einer Lidar-Sensorvorrichtung des Zugfahrzeugs aus einem Umgebungsbereich des Zugfahrzeugs und des angehängten Anhängers empfangen und zu Reflexionspunkten aus dem Umgebungsbereich korrespondierende Detektionspunkte in den Lidar-Sensordaten identifiziert. Darüber hinaus wird zumindest eine mit dem kinematischen Modell zumindest bereichsweise überlappende Modell-Unterregion bestimmt, die innerhalb der Modell-Unterregion liegende Detektionspunkte werden als mit dem Anhänger korrespondierende Detektionspunkte klassifiziert und zumindest ein Merkmal des Anhängers wird anhand der mit dem Anhänger korrespondierenden Detektionspunkte bestimmt. Das zumindest eine Merkmal wird mit dem kinematischen Modell verglichen und das kinematische Modell wird basierend auf dem Vergleich des zumindest einen Merkmals mit dem kinematischen Modell aktualisiert.

Gemäß des Verfahrens zum Charakterisieren eines an ein Zugfahrzeug angehängten Anhängers wird ein den Anhänger beschreibendes kinematisches Modell vorgegeben. Dabei werden Lidar-Sensordaten einer Lidar-Sensorvorrichtung des Zugfahrzeugs aus einem Umgebungsbereich des Zugfahrzeugs und des angehängten Anhängers empfangen und zu Reflexionspunkten aus dem Umgebungsbereich korrespondierende Detektionspunkte in den Lidar-Sensordaten identifiziert. Darüber hinaus wird zumindest eine mit dem kinematischen Modell zumindest bereichsweise überlappenden Modell-Unterregion bestimmt, die innerhalb der Modell-Unterregion liegenden Detektionspunkte werden als mit dem Anhänger korrespondierende Detektionspunkte klassifiziert und zumindest ein Merkmal des Anhängers wird anhand der mit dem Anhänger korrespondierenden Detektionspunkte bestimmt. Das zumindest eine Merkmal wird mit dem kinematischen Modell verglichen und das kinematische Modell wird basierend auf dem Vergleich des zumindest einen Merkmals mit dem kinematischen Modell aktualisiert.

Mittels des Verfahrens kann ein Fahrer eines durch das Zugfahrzeug und den Anhänger gebildeten Gespanns beim Manövrieren mit dem Gespann unterstützt werden. Das Gespann kann beispielsweise ein Kraftfahrzeug in Form von einem Pkw sowie einen Anhänger, beispielsweise einen Wohnanhänger oder einen Pferdeanhänger, aufweisen. Auch kann das Gespann ein Lastzug mit einem Lkw und zumindest einem Anhänger oder ein Sattelzug mit einer Sattelzugmaschine und einem Sattelauflieger sein. Ferner kann das Gespann ein Motorrad sowie einen an das Motorrad angekoppelten Anhänger aufweisen. Zur Unterstützung des Fahrers wird das Gespann basierend auf Lidar-Sensordaten charakterisiert, wobei die Charakterisierung des Anhängers insbesondere in Form von dem kinematischen Modell einem Fahrerassistenzsystem des Gespanns bereitgestellt wird. Eine Steuereinrichtung des Fahrerassistenzsystems kann basierend auf dem kinematischen Modell den Anhänger verfolgen bzw. "tracken" und eine Bewegung des Anhängers vorhersagen. Basierend auf der vorhergesagten Bewegung des Anhängers kann das Fahrerassistenzsystem eine Assistenzfunktion durchführen, beispielsweise dem Fahrer die voraussichtliche Bewegung des Anhängers auf einer Anzeigeeinrichtung visualisieren. So kann der Fahrer beispielsweise beim Rückwärtsfahren mit dem Gespann unterstützt werden.

Die Lidar-Sensordaten werden dabei von einer Empfangseinrichtung der Lidar-Sensorvorrichtung des Zugfahrzeugs empfangen. Die Lidar-Sensorvorrichtung ist insbesondere an einem Seitenbereich des Zugfahrzeugs, beispielsweise an einem Seitenspiegel des Zugfahrzeugs, angeordnet, wobei sich der Anhänger zumindest bereichsweise in einem Erfassungsbereich der Lidar-Sensorvorrichtung befindet. Beispielsweise kann die Lidar-Sensorvorrichtung Lichtpulse in Richtung des Anhängers aussenden und die zumindest teilweise an dem Anhänger reflektierten Lichtpulse als die Lidar-Sensordaten wieder empfangen. Der reflektierte Lichtpuls kann in mehreren Lichtstrahlen, beispielsweise in sechzehn Lichtstrahlen, empfangen werden. Jeder Lichtstrahl ist dabei ein Teilbereich des reflektierten Lichtpulses. Zum Empfangen der Lichtstrahlen des reflektierten Lichtpulses kann die Lidar-Sensorvorrichtung, welche beispielsweise als eine Solid-State-Lidar-Sensorvorrichtung ausgebildet ist, eine Empfangseinrichtung mit mehreren Empfangselementen, beispielsweise mit sechzehn Empfangselementen, aufweisen. Die Empfangselemente können beispielsweise Photodetektoren in Form von lichtsensitiven Halbleiterbauelementen, beispielsweise Photodioden, aufweisen. Die Empfangselemente können beispielsweise in einer Matrix, also spaltenweise und/oder zeilenweise, angeordnet sein. Jedem Empfangselement kann dabei eine Reflexionsrichtung bzw. ein Reflexionswinkel zugeordnet sein. Insbesondere empfängt ein Empfangselement nur Lichtstrahlen, welche aus der dem Empfangselement zugehörigen Reflexionsrichtung auf die Lidar-Sensorvorrichtung fallen.

Ein Lichtstrahl beschreibt einen Verlauf der Intensität des reflektierten Lichtes, also die Verteilung der Intensitätswerte über die Zeit. Dieser Verlauf kann nach Intensitätsspitzen bzw. Intensitätspeaks durchsucht werden, welche als Maximalwerte der Intensität in dem Verlauf identifizierbar sind. Diese Intensitätspeaks repräsentieren die Detektionspunkte bzw. Detektionen, sogenannte Echos, welche zu Reflexionspunkten in dem Umgebungsbereich korrespondieren. Ein solcher Reflexionspunkt kann beispielsweise ein Punkt auf einer Seitenwand des Anhängers sein. Dabei können Positionswerte für die Detektionspunkte bestimmt werden, welche beispielsweise die räumliche Lage der Reflexionspunkte relativ zu dem Zugfahrzeug beschreiben. Zum Bestimmen der Positionswerte werden für die Detektionspunkte jeweils ein Abstandswert sowie ein Reflexionswinkel bestimmt. Der Abstandswert für einen Detektionspunkt kann über Laufzeitmessungen anhand eines zu dem Detektionspunkt gehörigen Zeitpunkts bzw. Zeitstempels innerhalb des Verlaufes bestimmt werden. Da insbesondere jedem Empfangselement eine Reflexionsrichtung zugeordnet ist, also jedes Empfangselement mit einem bestimmten Reflexionswinkel korrespondiert, kann anhand des Empfangselementes für den Detektionspunkt zusätzlich zu dem Abstandwert der Reflexionswinkel bestimmt werden.

Das kinematische Modell des Anhängers wird, beispielsweise von der Steuereinrichtung des Fahrerassistenzsystems, basierend auf den Lidar-Sensordaten aktualisiert. Für den Fall, dass kein aktualisierbares kinematisches Modell vorliegt, kann dieses anhand der Detektionspunkte der Lidar-Sensordaten erstmalig erstellt werden. Dabei wird ein die mit dem Anhänger korrespondierenden Detektionspunkte umhüllender Rahmen vorbestimmt. Dazu können basierend auf den Positionswerten der Detektionspunkte diejenigen Detektionspunkte identifiziert werden, welche wahrscheinlich zu dem Anhänger gehören. Beispielsweise werden anhand der jeweiligen Positionswerte diejenigen Detektionspunkte identifiziert, welche sich in einem bestimmten Abstandsbereich hinter dem Zugfahrzeug befinden. Diese Detektionspunkte können geclustert bzw. gruppiert werden. Für das Cluster wird ein einhüllender Rahmen bzw. eine Einhüllende, beispielsweise mit einer rechteckigen Form, bestimmt. Dieser einhüllende Rahmen kann dann als kinematisches Initialmodell des Anhängers vorgegeben werden. Durch das kinematische Modell werden insbesondere eine räumliche Lage des Anhängers bezüglich des Zugfahrzeugs sowie eine Geometrie des Anhängers vorgegeben. Anhand des kinematischen Modells kann insbesondere eine Bewegung des Anhängers vorhergesagt bzw. bestimmt werden.

In Abhängigkeit von dem kinematischen Modell des Anhängers wird die Modell-Unterregion bestimmt. Die Modell-Unterregion beschreibt einen Bereich relativ zu dem kinematischen Modell des Anhängers, innerhalb welchem sich der Anhänger abweichend von dem kinematischen Modell befinden kann. Die Modell-Unterregion repräsentiert also einen Toleranzbereich, innerhalb welchem Detektionspunkte, auch wenn sie außerhalb des kinematischen Modells liegen, als zu dem Anhänger gehörig identifiziert werden. Dann werden, beispielsweise anhand der Positionswerte der Detektionspunkte, diejenigen Detektionspunkte identifiziert, welche innerhalb der Modell-Unterregion liegen. Von diesen Detektionspunkten wird angenommen, dass sie zu tatsächlichen Reflexionspunkten auf der Oberfläche des Anhängers korrespondieren. Anhand dieser Detektionspunkte kann das zumindest eine Merkmal des Anhängers, beispielsweise ein Abschnitt einer Kontur bzw. eines Umrisses des Anhängers, bestimmt werden. Dieses Merkmal wird mit dem kinematischen Modell verglichen. Bei einer Abweichung zwischen dem kinematischen Modell und dem zumindest einen Merkmal wird das kinematische Modell aktualisiert. Die Abweichung kann sich beispielsweise aus einem veränderten Anhängewinkel des Anhängers bezüglich des Zugfahrzeugs ergeben. Anhand der Abweichung kann somit beispielsweise der neue Anhängewinkel für das kinematische Modell bestimmt werden und in dem aktualisierten kinematischen Modell hinterlegt werden. Das kinematische Modell kann also in Abhängigkeit von der Abweichung zwischen dem nicht aktualisierten kinematischen Modell und dem zumindest einen Merkmal aktualisiert werden. Zum Aktualisieren des kinematischen Modells reichen dabei die Lidar-Sensordaten der Lidar-Sensorvorrichtung aus.

Daraus ergibt sich der Vorteil, dass zur Aktualisierung des kinematischen Modells keine Vielzahl an Sensoren am Zugfahrzeug und am Anhänger bereitgestellt werden muss. Somit ist auch keine Kommunikation zwischen Sensoren des Zugfahrzeugs und Sensoren des Anhängers nötig. Auch ist keine Eingabe durch den Fahrer des Gespanns nötig, um Eigenschaften des Anhängers zu definieren. Es wird lediglich höchstens eine Lidar-Sensorvorrichtung, beispielsweise an dem Seitenbereich des Zugfahrzeugs, benötigt, um den Anhänger charakterisieren zu können. Das Verfahren ist somit besonders einfach und kostengünstig gestaltet.

Besonders bevorzugt werden die vorstehend beschriebenen Schritte während jeweiliger Charakterisierungszyklen zum Charakterisieren des Anhängers durchgeführt, wobei das während eines Charakterisierungszyklus bestimmte aktualisierte kinematische Modell für einen darauffolgenden Charakterisierungszyklus zum erneuten Aktualisieren des kinematischen Modells vorgegeben wird. Die Rückgabe des aktualisierten kinematischen Modells an einen weiteren Charakterisierungszyklus entspricht einer Rückkopplung. Insbesondere wird also in jedem Aktualisierungszyklus das Merkmal des Anhängers aktualisiert und mit dem nicht aktualisierten kinematischen Modell verglichen. Basierend auf dem Vergleich zwischen dem aktualisierten Merkmal und dem nicht aktualisierten kinematischen Modell wird dann das kinematische Modell aktualisiert Aus der kontinuierlichen Aktualisierung des Merkmals ergibt sich der Vorteil, dass das kinematische Modell kontinuierlich in Abhängigkeit von den Lidar-Sensordaten aktualisiert werden kann und zur Bestimmung eines neuen kinematischen Modells verwendet werden kann. Eine aktuelle Lage sowie Geometrie des Anhängers können somit kontinuierlich mit hoher Genauigkeit bestimmt werden.

Es kann vorgesehen sein, dass als die zumindest eine Modell-Unterregion zumindest ein Modell-Bereich bestimmt wird, durch welchen eine eine Wand des Anhängers charakterisierende Kante des kinematischen Modells eingerahmt wird. Insbesondere werden eine Position des Modell-Bereiches und damit die einzurahmende Kante in Abhängigkeit von einem Anbringungsort der Lidar-Sensorvorrichtung am Zugfahrzeug bestimmt. Der Anhänger kann beispielsweise eine rechteckförmige Kontur aufweisen und zwei gegenüberliegende, sich entlang einer Längsachse des Anhängers erstreckende Seitenwände, eine Vorderseite bzw. Vorderwand sowie eine Rückseite bzw. Rückwand aufweisen. In dem kinematischen Modell kann der Anhänger in Form von einem Rechteck dargestellt sein, wobei die Seitenwände, die Vorderwand und die Rückwand als jeweilige Kanten dargestellt sind. Durch die Modell-Unterregion wird nun insbesondere eine der Kanten eingerahmt. Der Modell-Bereich kann also die Kante selbst sowie an die Kante angrenzende Bereiche umfassen. Es können auch mehrere Modell-Unterregionen bestimmt werden, wobei jede Modell-Unterregion insbesondere durch einen, eine der Kanten einrahmenden Modell-Bereich ausgebildet ist. Dabei werden insbesondere diejenigen Kanten von den Modell-Bereichen eingerahmt, welche mit einer in dem Erfassungsbereich der Lidar-Sensorvorrichtung liegenden Wand des Anhängers korrespondieren. Bei einer in einem rechten Seitenspiegel des Zugfahrzeugs angeordneten Lidar-Sensorvorrichtung werden beispielsweise die vorderseitige Kante sowie eine rechte Seitenkante des Modells durch den Modell-Bereich eingerahmt.

Vorzugsweise wird anhand der mit dem Anhänger korrespondierenden Detektionspunkte der zumindest einen Modell-Unterregion zumindest eine Ausgleichslinie bestimmt, wobei durch die zumindest eine Ausgleichslinie ein Wandbereich des Anhängers charakterisiert wird und das zumindest eine Merkmal anhand der zumindest einen Ausgleichslinie bestimmt. Die Ausgleichslinie kann beispielsweise durch Ausgleichsrechnung, insbesondere durch iteratives "Curve Fitting", basierend auf den Detektionspunkten bestimmt werden. Insbesondere werden für die Detektionspunkte innerhalb einer Modell-Unterregion Intensitätswerte bestimmt, die Detektionspunkte vor der Bestimmung der Ausgleichslinie durch Vergleichen der Intensitätswerte mit einem relativen Intensitäts-Schwellwert, welcher basierend auf den Intensitätswerten der Detektionspunkte innerhalb der Modell-Unterregion bestimmt wird, gefiltert und die Ausgleichslinie anhand der gefilterten Detektionspunkte bestimmt. Der relative Intensitäts-Schwellwert kann beispielsweise als der Mittelwert der Intensitätswerte innerhalb der Modell-Unterregion bestimmt werden. Durch das Filtern der Detektionspunkte innerhalb der Modell-Unterregion basierend auf der relativen Intensität innerhalb der Modell-Unterregion können Detektionspunkte, welche von hochreflektierenden Objekten in dem Umgebungsbereich des Gespanns, nicht aber von dem Anhänger stammen, entfernt werden.

Durch das iterative Anpassen der Ausgleichslinie, also das iterative "Curve fitting", können diejenigen Detektionspunkte innerhalb der Modell-Unterregion identifiziert werden, welche nicht mit der Ausgleichslinie konsistent sind bzw. nicht durch die Ausgleichslinie abgebildet werden können. Diese Detektionspunkte können als nicht zu dem Anhänger gehörig identifiziert und entfernt werden. Auch kann die Modell-Unterregion adaptiv vergrößert werden, beispielsweise anhand von Detektionspunkten, welche zwar außerhalb der vorbestimmten Modell-Unterregion liegen, jedoch konsistent mit der bestimmten Ausgleichslinie sind bzw. durch die Ausgleichslinie abgebildet werden. Die Ausgleichslinie repräsentiert den Wandbereich des Anhängers. Insbesondere werden für zumindest zwei Modell-Unterregionen, beispielsweise für die die rechte Kante einrahmende Modell-Unterregion und für die die Vorderkante einrahmende Modell-Unterregion, die Ausgleichslinien bestimmt. Als das Merkmal des Anhängers kann somit eine L-förmige Linie bestimmt werden. Die L-förmige Linie repräsentiert beispielsweise einen Bereich der Vorderwand sowie die rechten Seitenwand des Anhängers.

Besonders bevorzugt wird das kinematische Modell in Abhängigkeit von einem geometrischen Modell des Anhängers aufweisend zumindest einen geometrischen Parameter und in Abhängigkeit von zumindest einem kinematischen Parameter bestimmt. Zum Aktualisieren des kinematischen Modells wird das geometrische Modell und/oder der zumindest eine kinematische Parameter basierend auf dem Vergleich des zumindest einen Merkmals mit dem kinematischen Modell aktualisiert. Durch den zumindest einen kinematischen Parameter können eine aktuelle Lage sowie eine Bewegung des Anhängers bezüglich des Zugfahrzeugs beschrieben werden. Durch das geometrische Modell können eine Form bzw. eine Geometrie sowie eine Bauweise des Anhängers beschrieben werden. Das geometrische Modell kann separat bestimmt und aktualisiert werden, beispielsweise mittels der Merkmalsextraktion des zumindest einen Merkmals des Anhängers anhand der Lidar-Sensordaten. Zusätzlich kann auch der zumindest eine kinematische Parameter basierend auf dem zumindest einen anhand der Lidar-Sensordaten bestimmten Merkmal bestimmt und aktualisiert werden. Basierend auf dem aktualisierten geometrischen Modell und/oder dem zumindest einen aktualisierten kinematischen Parameter kann dann das kinematische Modell aktualisiert werden und in einem darauffolgenden Charakterisierungszyklus, in welchem wiederum das geometrische Modell und/oder der zumindest eine kinematische Parameter zum Aktualisieren des kinematischen Modells aktualisiert werden, vorgegeben werden.

Dabei kann vorgesehen sein, dass als der zumindest eine kinematische Parameter ein Anhängewinkel zwischen Anhänger und Zugfahrzeug und/oder eine Änderung des Anhängewinkels und/oder ein Achsabstand des Anhängers bestimmt wird und der zumindest eine kinematische Parameter basierend auf dem Vergleich des zumindest einen Merkmals und dem kinematischen Modell aktualisiert wird. Zum Aktualisieren des zumindest einen kinematischen Parameters wird also der Anhängewinkel zwischen Anhänger und Zugfahrzeug und/oder die Änderung des Anhängewinkels, entsprechend der Erfindung aber immer der Achsabstand des Anhängers basierend auf dem Vergleich des zumindest einen Merkmals und dem kinematischen Modell aktualisiert. Zum Bestimmen des Anhängewinkels bzw. der Änderung des Anhängewinkels kann beispielsweise die Ausgleichslinie, welche die Seitenwand des Anhängers beschreibt, mit derjenigen Kante des kinematischen Modells verglichen werden, welche mit der Seitenwand des Anhängers korrespondiert. Ein Winkel der Ausgleichslinie kann in das kinematische Modell eingegeben werden, welches daraufhin den Anhängewinkel sowie eine Änderungsrate des Anhängewinkels abschätzt.

In einer Weiterbildung der Erfindung wird als der zumindest eine geometrische Parameter eine geometrische Abmessung des Anhängers und/oder eine Länge einer Anhängerkupplung und/oder eine Position zumindest eines Schwenkpunktes des Anhängers und/oder eine Art einer Koppeleinrichtung des Anhängers zum Anhängen an das Zugfahrzeug bestimmt und der zumindest eine geometrische Parameter basierend auf dem Vergleich des zumindest einen Merkmals und dem kinematischen Modell aktualisiert. Als die zumindest eine geometrische Abmessung kann beispielsweise eine Länge und/oder eine Breite des Anhängers bestimmt werden. Die Position des Schwenkpunktes kann als eine Position einer vorderen Ecke des Anhängers bestimmt werden. Diese Ecke kann beispielsweise anhand des zumindest einen Merkmals des Anhängers in Form von der L-förmigen Linie erkannt werden. Die Länge des Anhängers kann beispielsweise als eine Länge der die Seitenwand des Anhängers repräsentierenden Ausgleichslinie bestimmt werden. Die Breite des Anhängers kann basierend auf einer Länge der die Frontwand darstellenden Ausgleichslinie bestimmt werden. Außerdem wird die Art der Koppeleinrichtung des Anhängers bestimmt, über welche der Anhänger mit dem Zugfahrzeug gekoppelt wird. Insbesondere wird bestimmt, ob es sich bei der Koppeleinrichtung um einen Schwanenhals oder eine Zuggabel bzw. Koppelstange handelt. Wenn beispielsweise eine anhand des zumindest einen Merkmals bestimmte Breite des Anhängers unrealistisch ist, so kann davon ausgegangen werden, dass die Art der Koppeleinrichtung in dem aktuellen kinematischen Modell fehlerhaft ist. Das kinematische Modell wird dahingehend aktualisiert, dass die Art der Koppeleinrichtung in dem aktuellen kinematischen Modell auf die jeweils andere Art der Koppeleinrichtung, also beispielsweise von einer regulären Zuggabel zu dem Schwanenhals, geändert wird.

Es erweist sich als vorteilhaft, wenn die zumindest eine geometrische Abmessung anhand des Vergleiches des zumindest einen Merkmals mit dem kinematischen Modell nur aktualisiert wird, wenn der zumindest eine geometrische Parameter größer als ein vorbestimmter Schwellwert ist. Dieser Ausführungsform liegt die Erkenntnis zugrunde, dass bei besonders geringen Anhängewinkel, beispielsweise während einer Geradeausfahrt des Gespanns, eine hintere Begrenzung des Anhängers, beispielsweise eine hintere Ecke des Anhängers, nicht in dem Erfassungsbereich der Lidar-Sensorvorrichtung liegt. Die von der Lidar-Sensorvorrichtung empfangenden Lidar-Sensordaten weisen also keine zu der hinteren Ecke des Anhängers korrespondierenden Detektionspunkte auf. Somit kann anhand des zumindest einen, die Seitenwand des Anhängers charakterisierenden Merkmals die Länge des Anhängers nicht korrekt bestimmt werden. Beispielsweise kann die anhand des Merkmals bestimmte Länge einen unrealistisch geringen Wert aufweisen. Um diesen unrealistischen Wert nicht fälschlicherweise als tatsächlichen, aktualisierten Wert der geometrischen Abmessung anzunehmen, wird das kinematische Modell nicht aktualisiert, falls der Wert geringer als der vorbestimmte Schwellwert ist. Das kinematische Modell wird also nur dann aktualisiert, wenn insbesondere die Länge des Anhängers den bestimmten Schwellwert überschreitet. Der Schwellwert kann beispielsweise in Abhängigkeit von einem Achsabstand des Anhängers bestimmt werden. Es kann nämlich davon ausgegangen werden, dass die Länge des Anhängers größer als der Achsabstand des Anhängers ist und beispielsweise zumindest das Eineinhalbfache des Achsabstandes beträgt.

In einer vorteilhaften Weiterbildung der Erfindung wird das kinematische Modell zusätzlich in Abhängigkeit von Odometriedaten des Zugfahrzeugs, insbesondere einer Geschwindigkeit des Zugfahrzeugs und/oder einem Lenkwinkel des Zugfahrzeugs, bestimmt und aktualisiert. Beispielsweise kann durch die Odometriedaten eine durch eine Änderung des Lenkwinkels des Zugfahrzeugs resultierende Änderung des Anhängewinkels zwischen dem Zugfahrzeug und dem Anhänger bestimmt werden und zur Aktualisierung des kinematischen Modells verwendet werden. Anhand der Odometriedaten können die von der Lidar-Sensorvorrichtung erfassen Daten in vorteilhafter Weise verifiziert bzw. überprüft werden. Das kinematische Modell wird insbesondere nur basierend auf den Lidar-Sensordaten und den Odometriedaten aktualisiert. Es sind also insbesondere keine weiteren Sensordaten und auch keine Kommunikation mit dem Anhänger nötig.

Es erweist sich als vorteilhaft, wenn, im Falle, dass anhand der Lidar-Sensordaten kein zum Aktualisieren des kinematischen Modells verwendbares Merkmal des Anhängers bestimmbar ist, das kinematische Modell nur anhand der Odometriedaten des Kraftfahrzeugs aktualisiert wird. Somit können für die Steuereinrichtung des Fahrerassistenzsystems beispielsweise ein vollständiger Aktualisierungsmodus und ein limitierter, selbstständiger Modus bereitgestellt werden. In dem vollständigen Aktualisierungsmodus wird das kinematische Modell basierend auf den Lidar-Sensordaten, beispielsweise durch Aktualisieren kinematischen Parameters, insbesondere des Anhängewinkels, und/oder durch Aktualisieren des geometrischen Modells, aktualisiert. In dem selbstständigen, limitierten Modus wird der zumindest eine kinematische Parameter und/oder das geometrische Modell des Anhängers nur anhand der Odometriedaten abgeschätzt. Dies ist besonders vorteilhaft, wenn beispielsweise keine Lidar-Sensordaten oder nur sehr verrauschte Lidar-Sensordaten zur Verfügung stehen, anhand derer das kinematische Modell nicht zuverlässig aktualisiert werden kann. Beispielsweise kann basierend auf dem anhand der Odometriedaten erfassten, aktuellen Lenkwinkel des Zugfahrzeugs der aktuelle Anhängewinkel des Anhängers bestimmt bzw. abgeschätzt werden. Basierend auf dem aktualisierten Lenkwinkel kann das kinematische Modell aktualisiert werden. Daraus ergibt sich der Vorteil, dass der Anhänger auch dann verfolgt bzw. "getracked" werden kann, also eine Position bzw. Lage des Anhängers bestimmt werden kann, wenn der Anhänger selbst für die Lidar-Sensorvorrichtung nicht sichtbar ist. Dies kann beispielsweise der Fall sein, wenn das Zugfahrzeug in diejenigen Richtung abbiegt, auf welcher das Zugfahrzeug keine Lidar-Sensorvorrichtung zum Erfassen von Lidar-Sensordaten des Anhängers aufweist.

Vorzugsweise wird das kinematische Modell als ein erweitertes Kalman-Filter implementiert, wobei der zumindest eine kinematische Parameter und der zumindest eine geometrische Parameter als interne Zustände definiert werden und die internen Zustände basierend auf den Lidar-Sensordaten und/oder basierend auf Odometriedaten des Zugfahrzeugs aktualisiert werden. Das kinematische Modell ist insbesondere ein nichtlineares und nicht-holonomes parametrisches System, dessen Zustandstrajektorie bzw. Historie wesentlich ist. Insbesondere ist vorgesehen, dass ein Achsabstand des Anhängers als ein erweiterter Zustand in dem Kalman-Filter implementiert wird, welcher nur anhand des basierend auf den Lidar-Sensordaten bestimmten Merkmals des Anhängers aktualisiert wird. Wird der vollständige Aktualisierungsmodus gewählt, so wird anhand der Lidar-Sensordaten der Anhängewinkel aktualisiert. Dieser Anhängewinkel wird verwendet, um das Kalman-Filter, insbesondere den erweiterten Zustand des Achsabstandes, zu aktualisieren. Wenn keine Messung bzw. keine Lidar-Sensordaten verfügbar sind, so wird der selbstständige, limitierte Modus ausgeführt, wobei interne Zustände des Kalman-Filters nur basierend auf dem Zustand des Zugfahrzeugs, also basierend auf den Odometriedaten, aktualisiert werden. Während des selbstständigen, limitierten Modus wird die Aktualisierung des erweiterten Zustands des Achsabstandes blockiert, alle anderen Zustände, insbesondere der Anhängewinkel, werden aktualisiert. Dadurch kann der Anhänger, auch wenn er nicht sichtbar ist, besonders zuverlässig verfolgt und charakterisiert werden.

Die Erfindung betrifft außerdem ein Fahrerassistenzsystem für ein durch ein Zugfahrzeug und einen Anhänger gebildetes Gespann, aufweisend zumindest eine Lidar-Sensorvorrichtung zum Anordnen an dem Zugfahrzeug und zum Erfassen von Lidar-Sensordaten aus einem Umgebungsbereich des Gespanns, und eine Steuereinrichtung, welche dazu ausgelegt ist, ein erfindungsgemäßes Verfahren oder eine vorteilhafte Ausführungsform davon durchzuführen. Beispielsweise kann die Steuereinrichtung anhand des ständig aktualisierten kinematischen Modells eine Bewegungsbahn des Anhängers vorhersagen und diese Bewegungsbahn auf einer Anzeigeeinrichtung, welche den Umgebungsbereich des Gespanns darstellt, als eine Überlagerung bzw. ein "Overlay" darstellen.

Ein erfindungsgemäßes Gespann umfasst ein Zugfahrzeug, einen an das Zugfahrzeug angekoppelten Anhänger sowie ein erfindungsgemäßes Fahrerassistenzsystem. Das Zugfahrzeug kann beispielsweise als ein Kraftfahrzeug, ein Lkw oder ein Motorrad ausgebildet sein. Das Zugfahrzeug kann beispielsweise eine Anhängerkupplung zum Anhängen des Anhängers über eine Zuggabel bzw. eine Koppelstange aufweisen. Auch kann das Zugfahrzeug beispielsweise eine Ladefläche aufweisen, über welche der Anhänger mittels eines sogenannten Schwanenhalses ankoppelbar ist.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Gespann.

Mit Angaben "links", "rechts", "vorne", "hinten", etc. sind Positionen und Orientierungen aus Sicht eines in Fahrzeuglängsrichtung des Zugfahrzeugs blickenden Beobachters angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Gespanns; und
- Fig. 2: eine schematische Darstellung einer Ausführungsform eines kinematischen Modells des Gespanns.

In den Figuren sind gleiche sowie funktionsgleiche Elemente mit den gleichen Bezugszeichen versehen.

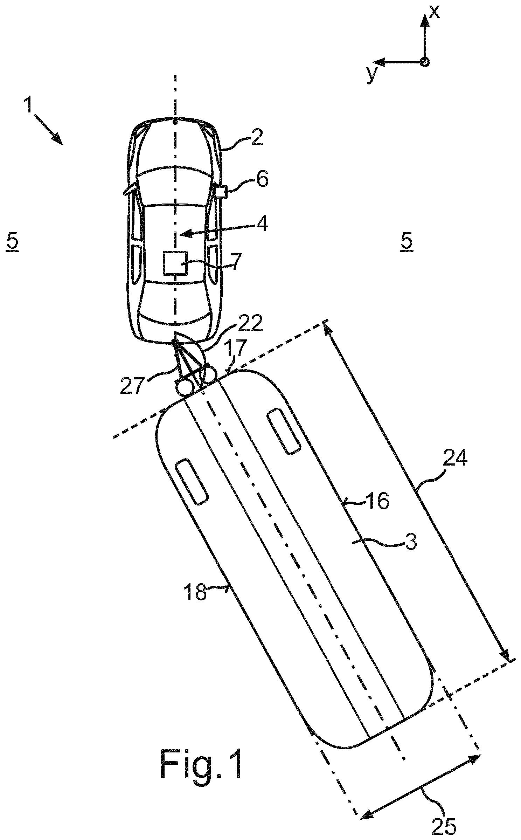

Fig. 1 zeigt ein Gespann 1 gemäß der vorliegenden Erfindung in einer Draufsicht. Das Gespann 1 wird gebildet aus einem Zugfahrzeug 2 sowie einem an das Zugfahrzeug 2 angehängten Anhänger 3. Hier ist das Zugfahrzeug 2 als ein Kraftfahrzeug in Form von einem Personenkraftwagen ausgebildet. Der Anhänger 3 kann beispielsweise ein Wohnanhänger oder ein Pferdeanhänger sein. Das Gespann 1 umfasst ein Fahrerassistenzsystem 4, welches dazu ausgelegt ist, einen Fahrer des Gespanns 1 beim Rangieren bzw. Manövrieren mit dem Gespann 1 zu unterstützen. Beispielsweise kann der Fahrer beim Rückwärtsfahren mit dem Gespann 1 unterstützt werden. Der Anhänger 3 ist hier über eine Anhängerkupplung an das Zugfahrzeug 2 angekoppelt und ist somit schwenkbar bezüglich des Zugfahrzeugs 2 gelagert. Der Fahrer kann durch das Fahrerassistenzsystem 4 beispielsweise dergestalt unterstützt werden, dass eine Fahrtrajektorie für den Anhänger 3 bestimmt wird, welche eine voraussichtliche Bewegung des Anhängers 3 in Abhängigkeit von einer aktuellen Fahrtrichtung des Zugfahrzeugs 2 beschreibt.

Dazu weist das Fahrerassistenzsystem 4 eine Lidar-Sensorvorrichtung 6 auf, welche hier an einem rechten Seitenspiegels des Zugfahrzeugs 2 angeordnet ist und deren Blickrichtung nach hinten (negative x-Richtung) in Richtung des Anhängers 3 gerichtet ist. Alternativ oder zusätzlich kann eine Lidar-Sensorvorrichtung 6 an einem linken Seitenspiegel des Zugfahrzeugs 2 angeordnet sein. Auch kann vorgesehen sein, dass eine Lidar-Sensorvorrichtung 6 an einer hinteren Stoßstange des Zugfahrzeugs 2 und/oder in Heckleuchten des Zugfahrzeugs 2 angeordnet ist. Der Anhänger 3 befindet sich zumindest bereichsweise in einem Erfassungsbereich der Lidar-Sensorvorrichtung 6. Die von der Lidar-Sensorvorrichtung 6 aus einem Umgebungsbereich 5 des Gespanns 1 erfassten Lidar-Sensordaten können einer Steuereinrichtung 7 des Fahrerassistenzsystems 4 übermittelt werden.

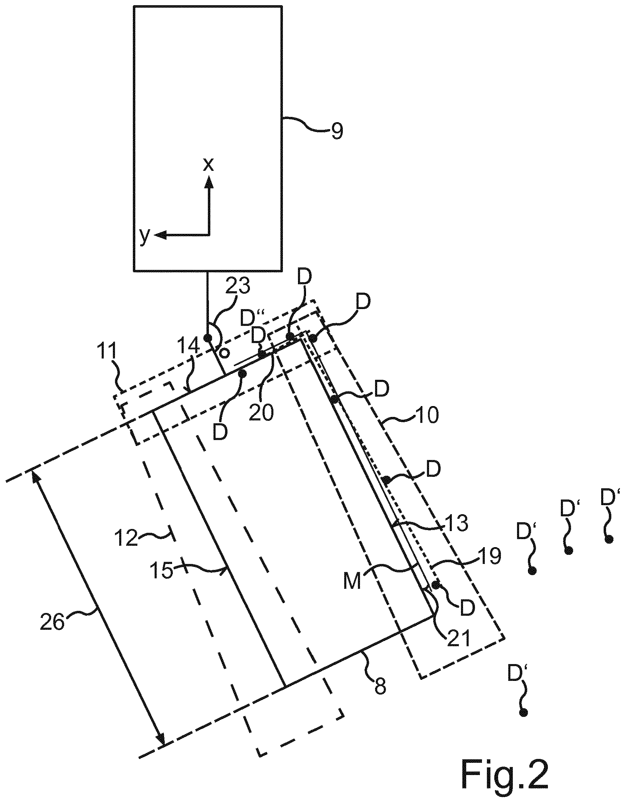

Zum Charakterisieren des Anhängers 3 wird ein kinematisches Modell 8 des Anhängers 3, wie in Fig. 2 gezeigt, erstellt. Das kinematische Modell 8 wird insbesondere fortlaufend aktualisiert. Das kinematische Modell 8 des Anhängers 3 ist hier in einem gekoppelten Zustand mit einem Modell 9 des Zugfahrzeugs 2 dargestellt. Das kinematische Modell 8 beschreibt räumliche Lage sowie eine Geometrie bzw. Bauweise des Anhängers 3. Anhand der kinematischen Modells 8 des Anhängers 3 kann eine Bewegung des Anhängers 3 beschrieben werden. Das kinematische Modell 8 des Anhängers 3 soll kontinuierlich aktualisiert werden. Die Steuereinrichtung 7 kann Merkmale M des Anhängers 3 aus den Lidar-Sensordaten der Lidar-Sensorvorrichtung 6 extrahieren. Dazu kann die Steuereinrichtung 7 in den Lidar-Sensordaten Detektionspunkte D, D', D" identifizieren, welche zu Reflexionspunkten aus dem Umgebungsbereich 5 des Gespanns 1 korrespondieren.

Außerdem wird zumindest eine, mit dem kinematische Modell 8 zumindest bereichsweise überlappende Modell-Unterregion 10, 11, 12 bestimmt. Die Modell-Unterregionen 10, 11, 12 rahmen dabei Kanten 13, 14, 15 des kinematischen Modells 8 ein, welche Seitenwände 16, 17, 18 (siehe Fig. 1) des Anhängers 3 repräsentieren. Beispielsweise repräsentiert die rechtsseitige Kante 13 eine rechte Seitenwand 16 des Anhängers 3, die frontseitige Kante 14 repräsentiert eine Frontwand 17 des Anhängers 3 und die linksseitige Kante 15 repräsentiert eine linke Seitenwand 18 des Anhängers 3. Die rechte Kante 13 wird dabei von einer ersten Modell-Unterregion 10 eingerahmt, die frontseitige Kante 14 wird von einer zweiten Modell-Unterregion 11 eingerahmt und die linke Kante 15 wird von einer dritten Modell-Unterregion 12 eingerahmt. Die erste und die dritte Modell-Unterregion 10, 13 sind hier trapezförmig ausgebildet, die zweite Modell-Unterregion 12 ist hier rechteckförmig ausgebildet.

Nun werden diejenigen Detektionspunkte D identifiziert, welche zu dem Anhänger 3 gehören bzw. mit dem Anhänger 3 korrespondieren. Anders ausgedrückt werden diejenigen Detektionspunkte D identifiziert, welche von einer Reflexion des von der Lidar-Sensorvorrichtung 6 ausgesendeten Lichtpulses an dem Anhänger 3 stammen. Da die Lidar-Sensorvorrichtung 6 hier an einem rechten Seitenspiegel des Zugfahrzeugs 2 angeordnet ist, weisen die Lidar-Sensordaten lediglich Detektionspunkte D, D', D" auf, welche zu dem Umgebungsbereich 5 rechts neben dem Zugfahrzeug 2 und dem Anhänger 3 gehören. Die Detektionspunkte D' liegen dabei in keiner der Modell-Unterregionen 10, 11, 12. Diese Detektionspunkte D' stammen beispielsweise von anderen Objekten in dem Umgebungsbereich 5 und korrespondieren daher nicht mit dem Anhänger 3. Diese Detektionspunkte D' werden daher entfernt bzw. nicht zur Aktualisierung des kinematischen Modells 8 verwendet. Basierend auf den in den Modell-Unterregionen 10, 11 liegenden Detektionspunkten D, D" werden mittels iterativen "Curve Fittings" Ausgleichslinien 19, 20 bestimmt. Eine erste Ausgleichslinie 19 verläuft hier innerhalb der ersten Modell-Unterregion 10 und bildet die rechte Seitenwand 16 des Anhängers 3 ab. Eine zweite Ausgleichslinie 20 verläuft hier zur Hälfte in der zweiten Modell-Unterregion 11 und bildet die Hälfte der Frontwand 17 des Anhängers 3 ab.

Ein innerhalb der zweiten Modell-Unterregion 11 liegender Detektionspunkt D" kann hier nicht durch die zweite Ausgleichslinie 20 abgebildet werden. Dieser Detektionspunkt D" wird, obwohl er innerhalb der zweiten Modell-Unterregion 11 liegt, als nicht zu dem Anhänger 3 gehörend klassifiziert und daher entfernt. Der Detektionspunkt D" kann beispielsweise vor der Bestimmung der Ausgleichslinie 20 herausgefiltert werden, indem für die Detektionspunkte D, D" Intensitätswerte bestimmt werden und die Detektionspunkte D, D" innerhalb der jeweiligen Modell-Unterregion 10, 11, 12 durch Vergleichen der Intensitätswerte mit einem Intensitäts-Schwellwert gefiltert werden. Der Intensitäts-Schwellwert kann dabei separat für jede Modell-Unterregion 10, 11, 12 beispielsweise als der Mittelwert der Intensitätswerte der Detektionspunkte D, D" der jeweiligen Modell-Unterregion 10, 11, 12 bestimmt werden.

Aus den beiden Ausgleichslinie 19, 20 kann ein Merkmal M des Anhängers 3 bestimmt werden, welches hier als eine L-förmige Linie ausgebildet ist und einen Bereich einer Kontur des Anhängers 3, hier den rechten Seitenbereich des Anhängers 3, repräsentiert. Dieses Merkmal M wird nun mit dem kinematischen Modell 8 verglichen. Hier weicht das Merkmal M um einen Winkel 21 von der rechten Seitenkante 13 des Anhängers ab. Dies entspricht einer Änderung des Anhängewinkels 22 des Anhängers 3 zum Zugfahrzeug im Vergleich zu dem Anhängewinkel 23 innerhalb des nicht aktualisierten kinematischen Modells 8. Zum Bestimmen des aktuellen, tatsächlichen Anhängewinkels 22 des Anhängers 3 können der in dem kinematischen Modell 8 hinterlegte Anhängewinkel 23 sowie der Winkel 21 addiert werden. Der Anhängewinkel 22 sowie die Änderung des Anhängewinkels 22 stellen kinematische Parameter des kinematischen Modells 8 dar. Zusätzlich kann als der kinematische Parameter des Anhängers 3 einen Achsabstand des Anhängers 3 bestimmt und aktualisiert werden.

Das kinematische Modell 8 kann nun für einen nächsten Charakterisierungszyklus zum Charakterisieren des Anhängers 3 aktualisiert werden, indem der aktualisierte Anhängewinkel vorgegeben wird. Auch können anhand des Vergleichs des Merkmals M mit dem kinematischen Modell 8 geometrische Abmessungen des Anhängers 3, beispielsweise eine Länge 24 sowie eine Breite 25 des Anhängers 3, bestimmt und aktualisiert werden. Dazu kann beispielsweise eine Länge der die Seitenwände 16, 18 des Anhänger 3 repräsentierenden Ausgleichslinie 19 bestimmt werden und die in dem kinematischen Modell 8 hinterlegte Länge 26 des Anhängers 3 auf die Länge der Ausgleichslinie 19 aktualisiert werden.

Darüber hinaus kann das kinematische Modell 8 des Anhängers 3 auch in Abhängigkeit von Odometriedaten des Zugfahrzeugs 2 aktualisiert werden. Insbesondere wird das kinematische Modell 8 nur basierend auf den Odometriedaten des Zugfahrzeugs 2 sowie basierend auf den aus den Lidar-Sensordaten extrahierten Merkmalen M des Anhängers 3 aktualisiert. Das kinematische Modell 8 des Anhängers 3 selbst ist insbesondere ein nichtlineares, nicht-holonomes Parametermodell, dessen Zustandsvektor bzw. dessen Historie entscheidend ist. Das kinematische Modell 8 kann als ein erweitertes Kalman-Filter implementiert werden, wobei die kinematischen Parameter interne Zustände des Kalman-Filters sind. Der Achsabstand des Anhängers 3 wird als erweiterter Zustand des Kalman-Filters bestimmt.

Das kinematische Modell 8 kann zwei Betriebsmodi aufweisen, nämlich einen vollständigen Aktualisierungsmodus sowie einen selbstständigen, limitierten Modus. Der vollständige Aktualisierungsmodus wird gewählt, wenn ein gültiges Merkmal M des Anhängers 3 anhand der Anhängermerkmalsextraktion aus den Lidar-Sensordaten bestimmt werden kann. Dies ist der Fall, wenn das Merkmal M des Anhängers 3 anhand der Lidar-Sensordaten zuverlässig bestimmt werden kann. Wenn beispielsweise anhand des erfassten Merkmals M der Anhängewinkel 22 des Anhängers 3 bestimmt und aktualisiert werden kann, wird dieser Anhängewinkel 22 benutzt, um das Kalman-Filter zu aktualisieren, insbesondere dessen erweiterten Zustand des Achsabstandes des Anhängers 3. Falls keine Messung verfügbar ist, also falls anhand der Lidar-Sensordaten kein aktueller Anhängewinkel 22 zwischen dem Anhänger 3 und dem Zugfahrzeug 2 bestimmt werden kann, so wird der selbständige, limitierte Modus ausgeführt. In dem selbstständigen, limitierten Modus werden die internen Zustände des Kalman-Filters nur basierend auf den Odometriedaten des Zugfahrzeugs 2 bestimmt und aktualisiert. Während des selbstständigen, limitierten Modus wird die Änderung des Achsabstandes, also die Aktualisierung des erweiterten Zustands des Achsabstandes, blockiert. Alle anderen Zustände, beispielsweise der Anhängewinkel 22, werden jedoch aktualisiert. Dies bedeutet, dass der Anhänger 3 auch dann verfolgt bzw. getracked werden kann, wenn er nicht sichtbar ist und sich außerhalb des Erfassungsbereiches der Lidar-Sensorvorrichtung 6 befindet. Darüber hinaus wird der selbständige, limitierte Modus aktiviert, wenn keine zuverlässigen Messungen möglich sind, weil die Lidar-Sensordaten beispielsweise zu verrauscht sind. Dies kann beispielsweise vorkommen, wenn das Gespann 1 geradeaus fährt und daher die Seitenwände 16, 18 des Anhängers 3 nicht sichtbar sind. Durch das Aktualisieren des Kalman-Filters und damit durch das Aktualisieren des kinematischen Modells 8 innerhalb des selbstständigen, limitierten Modus kann der Anhänger 3 auch ohne kontinuierlich verfügbare Messdaten charakterisiert werden.

Darüber hinaus wird das kinematische Modell 8 auch basierend auf den geometrischen Abmessungen des Anhängers 3, also der Länge 24, der Breite 25, einer Länge einer Anhängerkupplung sowie basierend auf einem Anhängertyp aktualisiert. Im vorliegenden Fall ist der Anhänger 3 über eine Zuggabel 27 bzw. Koppelstange am Zugfahrzeug 2 befestigt. Eine weitere Möglichkeit der Befestigung des Anhängers 3 am Zugfahrzeug 2 ist ein Schwanenhals. Die Breite 25 des Anhängers 3 wird berechnet aus der durch das kinematische Modell 8 angenommenen Geometrie des Anhängers 3 und dem bestimmten Anhängewinkel 22. Der Anhängertyp wird, beispielsweise zwischen dem regulären Anhänger 3 und dem Schwanenhalsanhänger, gewechselt, wenn die Anhängerbreite 25 einen unrealistischen Wert aufweist. Die Länge des Merkmals M und der Achsabstand aus dem kinematischen Modell 8 werden, wie bereits beschrieben, außerdem benutzt, um die Länge 24 des Anhängers 3 anzupassen. Dabei wird innerhalb des kinematischen Modells 8 eine Länge 24 des Anhängers 3 nur verkürzt, wenn die Länge des Merkmals M einen vorbestimmten Schwellwert überschreitet. Der Schwellwert ist beispielsweise als das Eineinhalbfache des Achsabstandes des Anhängers 3 bestimmt. Die Verkürzung der Anhängerlänge 24 wird also limitiert.

Zusammenfassend können durch die Merkmalsextraktion des Anhängers 3 sowie die Schätzung des kinematischen Modells 8 des Anhängers 3 alle zur Vorhersage der Bewegung des Anhängers 3 benötigten Anhängereigenschaften lediglich basierend auf Lidar-Sensordaten und Odometrieinformationen bestimmt werden. Insbesondere ist weder eine Eingabe der Anhängereigenschaften durch den Fahrer, noch eine Kommunikation mit dem Anhänger 3 selbst nötig.

## Patentansprüche

1. Verfahren zum Charakterisieren eines an ein Zugfahrzeug (2) angehängten Anhängers (3), bei welchem ein den Anhänger (3) beschreibendes kinematisches Modell (8) vorgegeben wird,
umfassend die Schritte:
a) Empfangen von Lidar-Sensordaten einer Lidar-Sensorvorrichtung (6) des Zugfahrzeugs (2) aus einem Umgebungsbereich (5) des Zugfahrzeugs (2) und des angehängten Anhängers (3) und Identifizieren von zu Reflexionspunkten aus dem Umgebungsbereich (5) korrespondierenden Detektionspunkten (D, D', D") in den Lidar-Sensordaten;
b) Bestimmen von zumindest einer mit dem kinematischen Modell (8) zumindest bereichsweise überlappenden Modell-Unterregion (10, 11, 12);
c) Klassifizieren der innerhalb der Modell-Unterregion (10, 11, 12) liegenden Detektionspunkte (D, D") als mit dem Anhänger (3) korrespondierende Detektionspunkte (D, D");
d) Bestimmen von zumindest einem Merkmal (M) des Anhängers (3) anhand der mit dem Anhänger (3) korrespondierenden Detektionspunkte (D, D");
e) Vergleichen des zumindest einen Merkmals (M) mit dem kinematischen Modell (8); und
f) Aktualisieren des kinematischen Modells (8) basierend auf dem Vergleich des zumindest einen Merkmals (M) mit dem kinematischen Modell (8), wobei das kinematische Modell (8) in Abhängigkeit von einem geometrischen Modell des Anhängers (3) aufweisend zumindest einen geometrischen Parameter und in Abhängigkeit von zumindest einem kinematischen Parameter bestimmt wird, und zum Aktualisieren des kinematischen Modells (8) das geometrische Modell und/oder der zumindest eine kinematische Parameter basierend auf dem Vergleich des zumindest einen Merkmals (M) mit dem kinematischen Modell (8) aktualisiert wird, **dadurch gekennzeichnet, dass** als der zumindest eine kinematische Parameter ein Achsabstand des Anhängers (3) bestimmt wird und der zumindest eine kinematische Parameter basierend auf dem Vergleich des zumindest einen Merkmals (M) und dem kinematischen Modell (8) aktualisiert wird.

2. Verfahren nach Anspruch 1,
**dadurch gekennzeichnet, dass**
die Schritte a) bis f) während jeweiliger Charakterisierungszyklen zum Charakterisieren des Anhängers (3) durchgeführt werden, wobei das während eines Charakterisierungszyklus in Schritt f) bestimmte aktualisierte kinematische Modell (8) für einen darauffolgenden Charakterisierungszyklus vorgegeben wird.

3. Verfahren nach Anspruch 1 oder 2,
**dadurch gekennzeichnet, dass**
in Schritt b) als die zumindest eine Modell-Unterregion (10, 11, 12) zumindest ein Modell-Bereich bestimmt wird, durch welchen eine eine Wand (16, 17, 18) des Anhängers (3) charakterisierende Kante (13, 14, 15) des kinematischen Modells (8) eingerahmt wird.

4. Verfahren nach einem der vorhergehenden Ansprüche,
**dadurch gekennzeichnet, dass**
in Schritt d) anhand der mit dem Anhänger (3) korrespondierenden Detektionspunkte (D, D") der zumindest einen Modell-Unterregion (10, 11, 12) zumindest eine Ausgleichslinie (19, 29) bestimmt wird, wobei durch die zumindest eine Ausgleichslinie (19, 20) ein Wandbereich des Anhängers (3) charakterisiert wird und das zumindest eine Merkmal (M) anhand der zumindest einen Ausgleichslinie (19, 20) bestimmt wird.

5. Verfahren nach Anspruch 4,
**dadurch gekennzeichnet, dass**
für die Detektionspunkte (D, D") innerhalb einer Modell-Unterregion (10, 11, 12) Intensitätswerte bestimmt werden, die Detektionspunkte (D, D") vor der Bestimmung der Ausgleichslinie (19, 20) durch Vergleichen der Intensitätswerte mit einem relativen Intensitäts-Schwellwert, welcher basierend auf den Intensitätswerten der Detektionspunkte (D, D") innerhalb der Modell-Unterregion (10, 11, 12) bestimmt wird, gefiltert werden und die zumindest eine Ausgleichslinie (19, 20) anhand der gefilterten Detektionspunkte (D) bestimmt wird.

6. Verfahren nach einem der vorhergehenden Ansprüchen,
**dadurch gekennzeichnet, dass**
als der zumindest eine kinematische Parameter ein Anhängewinkel (22) zwischen Anhänger (3) und Zugfahrzeug (2) und/oder eine Änderung des Anhängewinkels (22) bestimmt wird.

7. Verfahren nach Anspruch 6,
**dadurch gekennzeichnet, dass**
als der zumindest eine geometrische Parameter eine geometrische Abmessung (24, 25) des Anhängers (3) und/oder eine Länge einer Anhängerkupplung und/oder eine Position zumindest eines Schwenkpunktes des Anhängers (3) und/oder eine Art einer Koppeleinrichtung (27) des Anhängers (3) zum Anhängen an das Zugfahrzeug (2) bestimmt wird und der zumindest eine geometrische Parameter basierend auf dem Vergleich des zumindest einen Merkmals (M) und dem kinematischen Modell (8) aktualisiert wird.

8. Verfahren nach Anspruch 7,
**dadurch gekennzeichnet, dass**
die zumindest eine geometrische Abmessung (24, 25) anhand des Vergleiches des zumindest einen Merkmals (M) mit dem kinematischen Modell (8) nur aktualisiert wird, wenn die zumindest eine geometrische Abmessung (24, 25) größer als ein vorbestimmter Schwellwert ist.

9. Verfahren nach einem der vorhergehenden Ansprüche,
**dadurch gekennzeichnet, dass**
das kinematische Modell (8) zusätzlich in Abhängigkeit von Odometriedaten des Zugfahrzeugs (2), insbesondere einer Geschwindigkeit des Zugfahrzeugs (2) und/oder einem Lenkwinkel des Zugfahrzeugs (2), bestimmt und aktualisiert wird.

10. Verfahren nach Anspruch 9,
**dadurch gekennzeichnet, dass**
im Falle, dass anhand der Lidar-Sensordaten kein zum Aktualisieren des kinematischen Modells (8) verwendbares Merkmal (M) des Anhängers (3) bestimmbar ist, das kinematische Modell (8) nur anhand der Odometriedaten des Zugfahrzeugs (2) aktualisiert wird.

11. Verfahren nach einem der vorhergehenden Ansprüchen,
**dadurch gekennzeichnet, dass**
das kinematische Modell (8) als ein erweitertes Kalman-Filter implementiert wird, wobei der zumindest eine kinematische Parameter und der zumindest eine geometrische Parameter als interne Zustände des Kalman-Filters definiert werden und die internen Zustände basierend auf den Lidar-Sensordaten und/oder basierend auf Odometriedaten des Zugfahrzeugs (2) aktualisiert werden.

12. Verfahren nach Anspruch 11,
**dadurch gekennzeichnet, dass**
ein Achsabstand des Anhängers (3) als ein erweiterter Zustand in dem Kalman-Filter implementiert wird, welcher nur anhand des basierend auf den Lidar-Sensordaten bestimmten Merkmals (M) des Anhängers (3) aktualisiert wird.

13. Fahrerassistenzsystem (4) für ein durch ein Zugfahrzeug (2) und einen Anhänger (3) gebildetes Gespann (1), aufweisend zumindest eine Lidar-Sensorvorrichtung (6) zum Anordnen an dem Zugfahrzeug (2) und zum Erfassen von Lidar-Sensordaten aus einem Umgebungsbereich (5) des Gespanns (1) und eine Steuereinrichtung (7), welche dazu ausgelegt ist, ein Verfahren nach einem der vorhergehenden Ansprüche durchzuführen.

14. Gespann (1) aufweisend ein Zugfahrzeug (2), einen an das Zugfahrzeug (2) angekoppelten Anhänger (3) sowie ein Fahrerassistenzsystem (4) nach Anspruch 13.

## Claims

1. Method for characterizing a trailer (3) attached to a towing vehicle (2), in which a kinematic model (8) describing the trailer (3) is predefined,
comprising the steps of:
a) receiving lidar sensor data from a lidar sensor apparatus (6) of the towing vehicle (2) from a surrounding area (5) of the towing vehicle (2) and of the attached trailer (3) and identifying detection points (D, D', D") in the lidar sensor data that correspond to reflection points from the surrounding area (5);
b) determining at least one model subregion (10, 11, 12) which overlaps the kinematic model (8) at least in certain areas;
c) classifying the detection points (D, D") within the model subregion (10, 11, 12) as detection points (D, D") corresponding to the trailer (3);
d) determining at least one feature (M) of the trailer (3) on the basis of the detection points (D, D") corresponding to the trailer (3);
e) comparing the at least one feature (M) with the kinematic model (8); and
f) updating the kinematic model (8) on the basis of the comparison of the at least one feature (M) with the kinematic model (8), wherein the kinematic model (8) is determined on the basis of a geometric model of the trailer (3) having at least one geometric parameter and on the basis of at least one kinematic parameter, and, in order to update the kinematic model (8), the geometric model and/or the at least one kinematic parameter is/are updated on the basis of the comparison of the at least one feature (M) with the kinematic model (8), **characterized in that** an axle spacing of the trailer (3) is determined as the at least one kinematic parameter, and the at least one kinematic parameter is updated on the basis of the comparison of the at least one feature (M) and the kinematic model (8).

2. Method according to Claim 1,
**characterized in that**
steps a) to f) are carried out during respective characterization cycles for characterizing the trailer (3), wherein the updated kinematic model (8) determined during a characterization cycle in step f) is predefined for a subsequent characterization cycle.

3. Method according to Claim 1 or 2,
**characterized in that**
at least one model area, which frames an edge (13, 14, 15) of the kinematic model (8) that characterizes a wall (16, 17, 18) of the trailer (3), is determined in step b) as the at least one model subregion (10, 11, 12).

4. Method according to one of the preceding claims, **characterized in that**
at least one compensation line (19, 29) is determined in step d) on the basis of those detection points (D, D") in the at least one model subregion (10, 11, 12) which correspond to the trailer (3), wherein a wall area of the trailer (3) is **characterized by** the at least one compensation line (19, 20), and the at least one feature (M) is determined on the basis of the at least one compensation line (19, 20).

5. Method according to Claim 4,
**characterized in that**
intensity values are determined for the detection points (D, D") within a model subregion (10, 11, 12), the detection points (D, D") are filtered before the compensation line (19, 20) is determined by comparing the intensity values with a relative intensity threshold value determined on the basis of the intensity values of the detection points (D, D") within the model subregion (10, 11, 12), and the at least one compensation line (19, 20) is determined on the basis of the filtered detection points (D).

6. Method according to one of the preceding claims, **characterized in that**
an attachment angle (22) between the trailer (3) and the towing vehicle (2) and/or a change in the attachment angle (22) is/are determined as the at least one kinematic parameter.

7. Method according to Claim 6,
**characterized in that**
a geometric dimension (24, 25) of the trailer (3) and/or a length of a trailer coupling and/or a position of at least one pivot point of the trailer (3) and/or a type of coupling device (27) of the trailer (3) for attachment to the towing vehicle (2) is/are determined as the at least one geometric parameter, and the at least one geometric parameter is updated on the basis of the comparison of the at least one feature (M) and the kinematic model (8).

8. Method according to Claim 7,
**characterized in that**
the at least one geometric dimension (24, 25) is updated on the basis of the comparison of the at least one feature (M) with the kinematic model (8) only if the at least one geometric dimension (24, 25) is greater than a predetermined threshold value.

9. Method according to one of the preceding claims, **characterized in that**
the kinematic model (8) is additionally determined and updated on the basis of odometry data relating to the towing vehicle (2), in particular a speed of the towing vehicle (2) and/or a steering angle of the towing vehicle (2).

10. Method according to Claim 9,
**characterized in that**
if a feature (M) of the trailer (3) that can be used to update the kinematic model (8) cannot be determined on the basis of the lidar sensor data, the kinematic model (8) is updated only on the basis of the odometry data relating to the towing vehicle (2) .

11. Method according to one of the preceding claims, **characterized in that**
the kinematic model (8) is implemented as an extended Kalman filter, wherein the at least one kinematic parameter and the at least one geometric parameter are defined as internal states of the Kalman filter, and the internal states are updated on the basis of the lidar sensor data and/or on the basis of odometry data relating to the towing vehicle (2).

12. Method according to Claim 11,
**characterized in that**
an axle spacing of the trailer (3) is implemented as an extended state in the Kalman filter, which is updated only on the basis of the feature (M) of the trailer (3) that is determined on the basis of the lidar sensor data.

13. Driver assistance system (4) for a combination (1) formed by a towing vehicle (2) and a trailer (3), having at least one lidar sensor apparatus (6) for arrangement on the towing vehicle (2) and for capturing lidar sensor data from a surrounding area (5) of the combination (1), and a control device (7) which is designed to carry out a method according to one of the preceding claims.

14. Combination (1) having a towing vehicle (2), a trailer (3) coupled to the towing vehicle (2) and a driver assistance system (4) according to Claim 13.

## Revendications

1. Procédé permettant de caractériser une remorque (3) attelée à un véhicule tracteur (2), dans lequel un modèle cinématique (8) décrivant la remorque (3) est spécifié,
comprenant les étapes consistant à :
a) recevoir des données de capteur lidar d'un dispositif de capteur lidar (6) du véhicule tracteur (2) à partir d'une zone environnante (5) du véhicule tracteur (2) et de la remorque attelée (3), et identifier parmi les données de capteur lidar des points de détection (D, D', D") correspondant à des points de réflexion provenant de la zone environnante (5) ;
b) déterminer au moins une sous-région de modèle (10, 11, 12) se chevauchant au moins par endroits avec le modèle cinématique (8) ;
c) classifier les points de détection (D, D") situés à l'intérieur de la sous-région de modèle (10, 11, 12) comme étant des points de détection (D, D") correspondant à la remorque (3) ;
d) déterminer au moins une particularité (M) de la remorque (3) à l'aide des points de détection (D, D") correspondant à la remorque (3) ;
e) comparer ladite au moins une particularité (M) avec le modèle cinématique (8) ; et
f) mettre à jour le modèle cinématique (8) sur la base de la comparaison de ladite au moins une particularité (M) avec le modèle cinématique (8), dans lequel le modèle cinématique (8) est déterminé en fonction d'un modèle géométrique de la remorque (3) présentant au moins un paramètre géométrique et en fonction d'au moins un paramètre cinématique, et pour la mise à jour du modèle cinématique (8), le modèle géométrique et/ou ledit au moins un paramètre cinématique est/sont mis à jour sur la base de la comparaison de ladite au moins une particularité (M) avec le modèle cinématique (8),
**caractérisé en ce qu'**un empattement de la remorque (3) est déterminé comme ledit au moins un paramètre cinématique, et ledit au moins un paramètre cinématique est mis à jour sur la base de la comparaison de ladite au moins une particularité (M) avec le modèle cinématique (8) .

2. Procédé selon la revendication 1, **caractérisé en ce que** les étapes de a) à f) sont effectuées pendant des cycles de caractérisation respectifs pour caractériser la remorque (3), dans lequel le modèle cinématique (8) mis à jour, déterminé pendant un cycle de caractérisation à l'étape f), est spécifié pour un cycle de caractérisation suivant.

3. Procédé selon la revendication 1 ou 2, **caractérisé en ce qu'**à l'étape b) comme ladite au moins une sous-région de modèle (10, 11, 12), au moins une zone de modèle est déterminée par laquelle une arête (13, 14, 15) du modèle cinématique (8) caractérisant une paroi (16, 17, 18) de la remorque (3) est encadrée.

4. Procédé selon l'une quelconque des revendications précédentes, **caractérisé en ce qu'**à l'étape d), à l'aide des points de détection (D, D") de ladite au moins une sous-région de modèle (10, 11, 12) correspondant à la remorque (3), au moins une droite de compensation (19, 29) est déterminée, dans lequel ladite au moins une droite de compensation (19, 20) caractérise une zone de paroi de la remorque (3), et ladite au moins une particularité (M) est déterminée à l'aide de ladite au moins une droite de compensation (19, 20).

5. Procédé selon la revendication 4, **caractérisé en ce que** des valeurs d'intensité sont déterminées pour les points de détection (D, D") à l'intérieur d'une sous-région de modèle (10, 11, 12), les points de détection (D, D") sont filtrés avant la détermination de la droite de compensation (19, 20) par une comparaison des valeurs d'intensité avec une valeur seuil d'intensité relative qui est déterminée sur la base des valeurs d'intensité des points de détection (D, D") à l'intérieur de la sous-région de modèle (10, 11, 12), et ladite au moins une droite de compensation (19, 20) est déterminée à l'aide des points de détection filtrés (D) .

6. Procédé selon l'une quelconque des revendications précédentes, **caractérisé en ce qu'**un angle d'attelage (22) entre la remorque (3) et le véhicule tracteur (2) et/ou une variation de l'angle d'attelage (22) est/sont déterminés comme ledit au moins un paramètre cinématique.

7. Procédé selon la revendication 6, **caractérisé en ce qu'**une dimension géométrique (24, 25) de la remorque (3) et/ou une longueur d'un accouplement de remorque et/ou une position d'au moins un centre de gravité de la remorque (3) et/ou un type d'un dispositif d'accouplement (27) de la remorque (3) pour l'attelage au véhicule tracteur (2) sont déterminés comme ledit au moins un paramètre géométrique, et ledit au moins un paramètre géométrique est mis à jour sur la base de la comparaison de ladite au moins une particularité (M) avec le modèle cinématique (8).

8. Procédé selon la revendication 7, **caractérisé en ce que** ladite au moins une dimension géométrique (24, 25) n'est actualisée à l'aide de la comparaison de ladite au moins une particularité (M) avec le modèle cinématique (8) que si ladite au moins une dimension géométrique (24, 25) est supérieure à une valeur seuil prédéterminée.

9. Procédé selon l'une quelconque des revendications précédentes, **caractérisé en ce que** le modèle cinématique (8) est déterminé et mis à jour en plus en fonction de données odométriques du véhicule tracteur (2), en particulier en fonction d'une vitesse du véhicule tracteur (2) et/ou d'un angle de braquage du véhicule tracteur (2).

10. Procédé selon la revendication 9, **caractérisé en ce que** dans le cas où aucune particularité (M) de la remorque (3) utilisable pour la mise à jour du modèle cinématique (8) ne peut être déterminée à l'aide des données de capteur lidar, le modèle cinématique (8) est mis à jour uniquement à l'aide des données odométriques du véhicule tracteur (2).

11. Procédé selon l'une quelconque des revendications précédentes, **caractérisé en ce que** le modèle cinématique (8) est mis en œuvre en tant que filtre de Kalman étendu, dans lequel ledit au moins un paramètre cinématique et ledit au moins un paramètre géométrique sont définis comme des états internes du filtre de Kalman, et les états internes sont mis à jour sur la base des données de capteur lidar et/ou sur la base de données odométriques du véhicule tracteur (2).

12. Procédé selon la revendication 11, **caractérisé en ce qu'**un empattement de la remorque (3) est mis en œuvre comme un état étendu dans le filtre de Kalman qui est mis à jour uniquement à l'aide de la particularité (M) de la remorque (3) déterminée sur la base des données de capteur lidar.

13. Système d'assistance au conducteur (4) pour un ensemble attelé (1) composé d'un véhicule tracteur (2) et d'une remorque (3), présentant au moins un dispositif de capteur lidar (6) à agencer sur le véhicule tracteur (2) et pour détecter des données de capteur lidar à partir d'une zone environnante (5) de l'attelage (1), et un dispositif de commande (7) qui est conçu pour exécuter un procédé selon l'une quelconque des revendications précédentes.

14. Ensemble attelé (1) présentant un véhicule tracteur (2), une remorque (3) attelé au véhicule tracteur (2), ainsi qu'un système d'assistance au conducteur (4) selon la revendication 13.
